# EUROPEAN PATENT SPECIFICATION

(11) **EP 2 796 630 B1**
(45) Date of publication and mention of the grant of the patent: **21.03.2018**
(21) Application number: 14386009.6
(22) Date of filing: 24.04.2014
(51) Int. Cl.: E04B 1/24, E04C 3/07

(54) **Structural, polymorphic system of metal**
Strukturelles, polymorphes System aus Metall
Système de construction métallique polymorphe

(30) Priority: 24.04.2013 GR 2013100251
(43) Date of publication of application: 29.10.2014
(73) Proprietor: Pagouni SA-Metal Structural Products, 57008 Thessaloniki (GR)
(72) Inventor: Pagounis, Zissis, Thessaloniki - Veria (GR)

(56) References cited:
- EP-A1- 1 031 669
- WO-A1-93/24712
- AU-B2- 2003 200 119
- GB-A- 2 169 937
- US-A1- 2007 095 002

## Description

### Field of the Invention

The invention concerns a structural, polymorphic system of metal, thin wall, open sections, consisting of two sections joined together for the formation of light metal frames for buildings or other mechanical constructions with high mechanical strength and bear on their three sides one or more longitudinal channels. GB 2 169 937 A discloses a structural system comprising sections each having an U-shaped cross-section.

### Background of the Invention

Metal thin wall open sections are known in the shape of C and U, which can be joined together to form frames and trusses, in lengths and perforations defined by the static study of the construction. The structure members are manufacture by specialized, digital guided roll-forming machines, which use metal sheets in the form of strips, and they roll-form, perforate and cut the sections in order to get the designed form. The precondition for production is particular demand and detailed structural drawings. For the assembly of the members of each construction, particular screws are used and placed on the pre-perforated positions, in preformed recesses or externally on the flat sides. As a result the screw head prevents the contact of the covering material. Another way to construct frames is with closed metal sections (tubes), of standardized lengths and sections which are cut and welded for the formation of frames and trusses.

The present invention has the purpose to create a structural, polymorphic system of high mechanical strength, which can be easily constructed by anyone with the use of simple means, in a fast and economical way without the need of expensive equipment and special skills.

According to the invention, this is achieved by a structural, polymorphic system according to claim 1 with the use of two metal, thin wall, open sections, one narrow and one wide, bearing on their three sides one or more longitudinal channels and the one fits into the other, vertically or inclined and they are joined with drill-screws, forming frames and trusses. These mount together with the involvement of their channels and protrusions, creating spatial structures.

The advantage of the current invention is that the sections of the structural polymorphic system are produced with the same technology of cold forming, ensuring dimensional precision, with the use of much more economical roll-formers, without digital guidance and without perforating equipment, in standardized lengths, without the need of particular order and they are available for finishing at the construction place. The sections are cut with simple means (angle cutting grinder or hacksaw) and are joined vertically or inclined with drill-screws inside the channels (and with the use of a simple electric screwdriver), forming flat frames and trusses of high mechanical strength. These frames and trusses are joined together and form spatial structures that can constitute building frames or other structures of mechanical constructions. Moreover, the frames can be covered with other various materials such as panels, plasterboards, metal sheets, chipboards etc. The immersion of the screw head allows the excellent contact of the covering materials on the metal sections of the invention. The production capability from galvanized steel and the absence of welding makes the painting unnecessary. The presence of metrical engraving on their one edge makes their cutting easier. The artificial embossment of the surfaces where the screwing can start makes screwing easy and prevents the slipping of the screw nose, providing high construction speed. By rotating the section around its longitudinal axis by 180° it is perfectly joined with one same section that was not rotated, thus creating a "closed" section. By this way the exploitation of every waste that was not used from the initial length is possible. The polymorphic character of the system and the versatility along with the working easiness of its sections, make this system attractive to construction professionals as well as to amateurs.

The invention is described below, with reference to the attached figures in which:

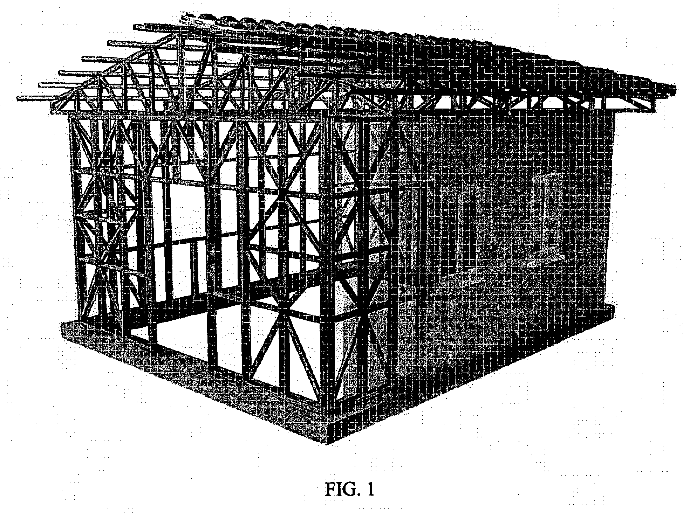

FIG. 1 shows a perspective figure of building frame constructed with the invention.
FIG. 2 shows a perspective figure of a mechanical construction that is used as base for solar panels, constructed with the invention.
FIG. 3 shows a perspective figure of the longitudinal connection on which we see the measuring engraving (16) and the surface embossment (17).

The FIGS. 4a,4b,4c,4d,4e,4f, present external joints of same sections with parallel longitudinal axes, which are common at spatial structures.

The FIGS. 5a,5b,5c, present external joints between different sections with parallel longitudinal axes, which are common at spatial structures.

The FIGS. 6a,6b, present the figure of the narrow rectangular parallelogram section and the wider which surrounds it and it was originated from it with the increase of the dimension of the channel base (2) that lies on the middle of the section base from b to b+2a, so that the section will be able to host the narrow tightly.

The FIGS. 7a,7b, present joints of same sections, that the longitudinal axes are nearly coaxial, with their between distance, equal to their thickness.

The FIGS. 8a,8b, present internal joints of the two different sections with longitudinal axes vertical, which are common at flat parts of spatial structures namely frames and trusses.

The FIGS. 9a,9b,12a,12b, present the figure of the narrow rectangular parallelogram section and variations of the side forming of the wider that surrounds it and was originated from it by increasing the dimension of the channel (2) that lies on the middle of the section base from b to b+2a, so that the wide section will be able to host the narrow tightly and be connected with the double number of screws.

The FIGS. 10a,10b,13a,13b, present joints of the altered sections with same sections of them, where the longitudinal axes are nearly coaxial, with their between distance equal to their thickness, where the double number of screws can be seen.

The FIGS. 11a,11b,14a,14b, present internal joints of altered, different sections with their longitudinal axes vertical, which are common at flat parts of spatial structures namely frames and trusses, where the double number of screws can be seen.

The FIGS. 15a,15b, present an alternation of the section with additional internal bending of the cross section edges (18,19) for additional amplification and the possibility to hook other materials on it, like solar panels, with the use of screws (20) and plates (21) as shown in figure 16.

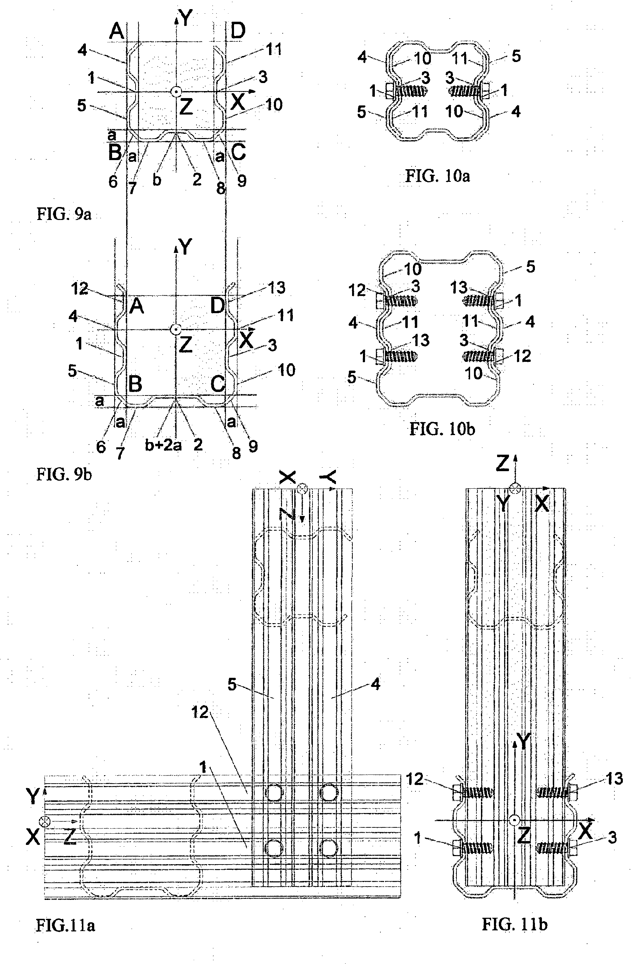

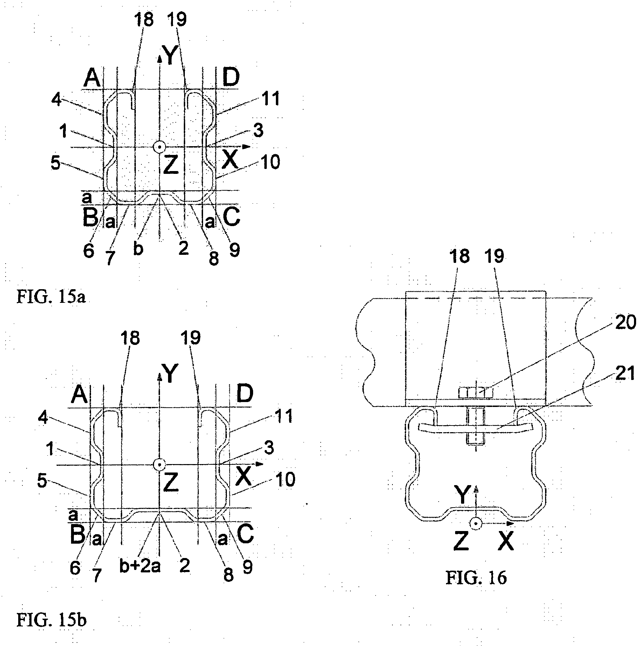

The embodiments shown in fig. 9a -16 do not form part of the claimed invention. According to the current invention the structural, polymorphic system, consists of two metal, thin wall, open sections according to claim 1.

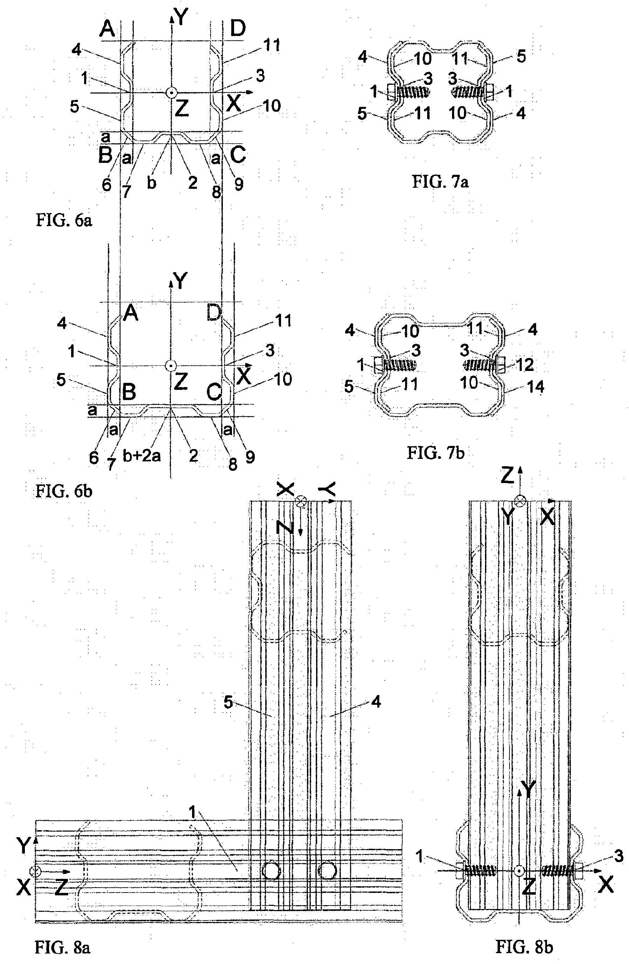

The particular system consists of a narrow section and a one similar with wider bottom that can host the narrow tightly, vertically or inclined (FIGS. 8a,8b). The internal free width of the section is equal to the external width of the narrow section.

The narrow cross section is entered in the rectangle parallelogram ABCD (FIG. 6a) and is characterized by the existence of the trapezoidal channels (1,2,3) in the middle of its sides with 45 degree inclined sidewalls and the inwardly formed corners which generate with the outer side segments, protrusions (4,5,6,7,8,9,10,11) with trapezoid shape similar to this of the side channels. The small bases of all trapezoids (4,1,5,6,7,8) existing on one side and the base of the cross section are equal measured on the outer outline of the cross section, with a deviation possibility plus or minus the section material thickness.

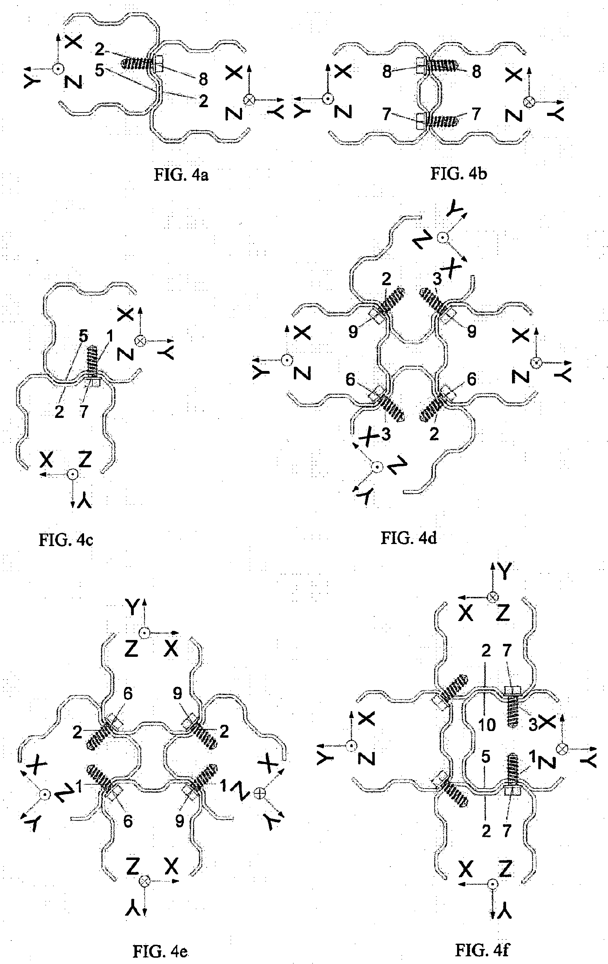

Then the assembly condition of the trapezoidal channels and protrusions on the sidewalls of trapezoids is satisfied, during the outdoor assembly of the same section with parallel longitudinal axes (FIGS. 4a,4b,4c,4d,4e,4f).

An important feature of the invention is that from the narrow section (FIG. 6a) entered in a rectangle parallelogram the wide section is generated (FIG. 6b) by increasing the dimensions of the channel base (2) located in the middle of the cross section base (from b to b +2a, where a is the channel depth plus the thickness of the material of the section) in order to host tightly the narrow one. As a result there are common geometric features in the trapezoidal channels (1,2,3) and the protrusions (4,5,6,7,8,9,10,11) (FIGS. 6a, 6b) on the wide and narrow section sides. By this way it is possible to immobilize the sections and maintain parallel the longitudinal axes, while having in several directions (FIGS. 4a,4b,4c,4d,4e,4f) the cross section axes.

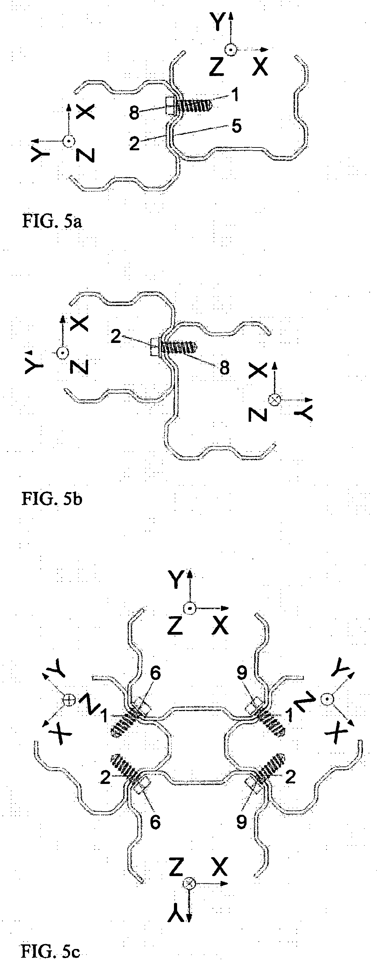

The narrow and wide section can be mounted externally together with their longitudinal axes parallel in several directions of the cross section axes (FIGS. 5a,5b,5c).

This feature of the invention has as a result the main forces to be transferred across the frames, through the sections involved, and the joint screws not to be loaded in shear strength from frame forces, as it can be seen in FIG. 5a, where through channel (1) and projection (5) of the wide section and channel (2) and protrusion (8) of the narrow cross section the frame forces are transferred. The only shear forces on the screws are at the joint of the narrow and wide section with the longitudinal axis vertical or inclined (FIGS. 8a,8b).

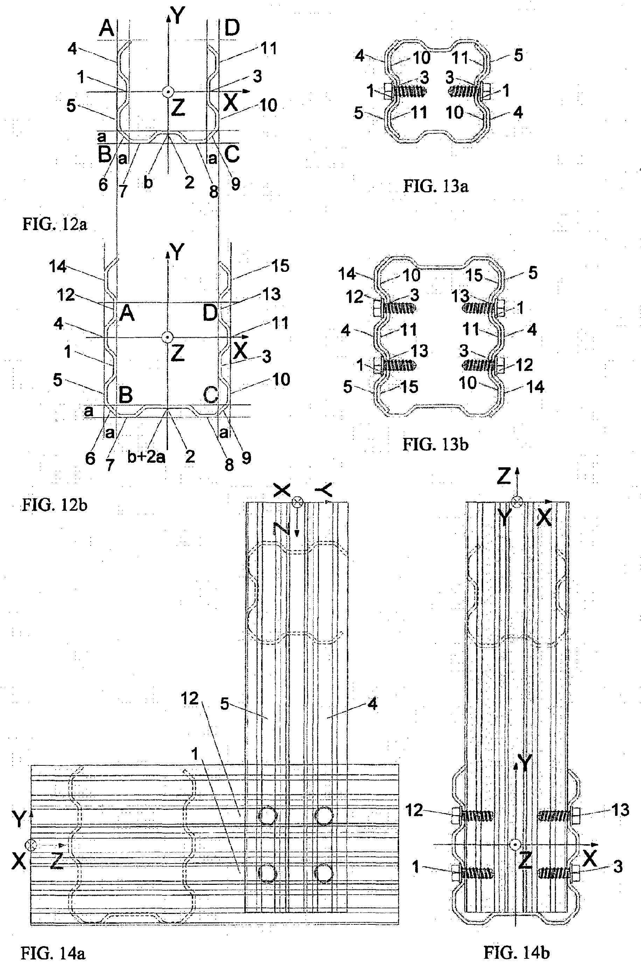

Respectively the system can be implemented with alterations of the wide section with two channels (1,12) and (3,13) at its sides (FIGS. 9a,9b,12a,12b) for the double number of joint screws and preservation of the same geometrical feature of the similarity of the trapezoid shape on the channels (1,2,3,12,13) and the protrusions (4,5,6,7,8,9,10,11,14,15) and the possibility of multiple mountings with other sections of the same family.

The forming of the sections (narrow and wide) is such that by turning them around their longitudinal axis, they can fit perfectly with a same section (FIGS. 7a, 7b, 10a, 10b, 13a, 13b). The one section part fits internally and the other externally having a slight variation on the trapezoidal channel bases (3,13) and protrusions (10,11,15) of the one side (approximately as much as the thickness of the material) in order to nest into the opposite. By this way, a "closed" section of high mechanical strength can be created.

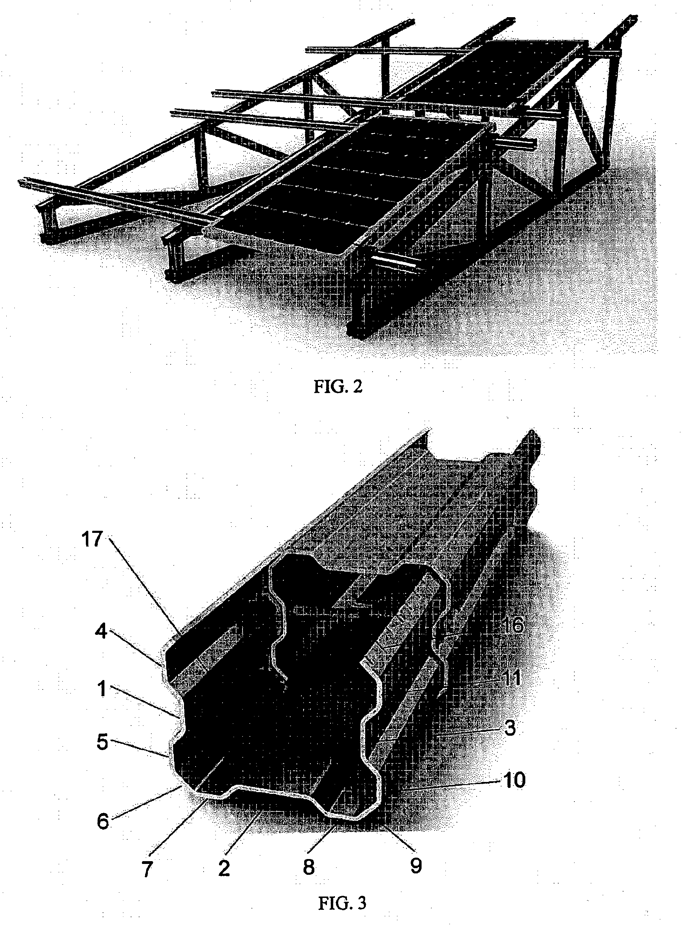

The features above allow the longitudinal continuation of the sections with screwed sleeve-like joints of the same material (FIG. 3), thus the resulting waste is fully used and practically there is no material discarded, neither a predefined plan is required nor expensive equipment is needed for each frame -and truss construction.

The channels (1,12,3,13) have sufficient depth so that by screwing the drill-screw in their center, its head does not protrude and does not prevent the contact of covering materials (FIGS. 8b, 11b, 14b), while they facilitate the transfer of forces between the frame and increase the strength of the sections in bending, torsion, compression and buckling. During the assembly with the longitudinal axes in vertical position, the screws are fitted into the channel bottom (1) of the external wide section and on to the protrusions (5,4) of the internal narrow, which is in contact with the inner side of the channel bottom (1) of the wide section (FIGS. 8a, 8b). By this way, the screws are not strained in bending. Screwed confections without welding make forming quick and easy, while the use of galvanized steel makes the paint unnecessary. Standard lengths facilitate transportation and merchantability, while the metrical engraving (16) facilitates the cutting. The artificial embossment (17) of the surfaces makes screwing easy and prevents the screw nose from "slipping", ensuring assembly speed and reduced material thickness (FIG. 3).

## Claims

1. Structural, polymorphic system comprising:
a narrow section and a wide section,
wherein each of said sections is a metal, thin wall, open section having an U-shaped cross-section,
wherein the narrow and the wide section can be joined together with drilling screws for the formation of frames and trusses,
each of said sections having three sides, two leg sides and one base side, forming the U-shape,
wherein in the middle of each of the three sides a channel (1, 2, 3) is formed with a trapezoidal shape with 45 degrees inclined sidewalls,
wherein the channels (1, 3) on the two leg sides of the narrow and the wide section and the channel (2) on the base side of the narrow section have the same dimensions with the same depth and the same width at the channel base,
wherein said depth of the channel plus the material thickness of the metal section is equal to 'a',
wherein the channel (2) on the base side of the wide section have also said same depth and the channel base of said channel (2) has a width of b + 2a,
so that the narrow section can be fitted tightly, vertically or inclined, in the wide section,
wherein the free ends of the two leg sides of the narrow and wide U-shaped sections having inwardly bent corners which generate with the parts of the sides on both sides of the trapezoidal side channels protrusions (4, 5, 6, 7, 8, 9, 10, 11) with trapezoid shape similar to this one of the side channels,
wherein all the protrusions (4, 5, 6, 7, 8, 9, 10, 11) of the two sections have the same dimensions.

2. The structural polymorphic system according to claim 1 is **characterized by** the fact that the channels (1,2,3) have sufficient depth so that when screwing the drill-screw or any other screw at their center (depending on the size and use of the system sections) the screw head does not protrude and the contact of covering materials is not prevented, while they facilitate the force transfer between the frames and they amplify the section resistance in bending, torsion, compression and buckling.

3. The structural polymorphic system according to claim 1 is **characterized by** the fact that the sections can bear metrical engraving (16) on their side in order to make their cutting easier and embossed surface (17) where the screwing takes place for faster assembly.

## Patentansprüche

1. Ein Strukturelles, polymorphes System, umfassend:
ein schmaler und ein breiter Abschnitt,
wobei jeder der Abschnitte ein metallischer, dünnwandiger, offener Abschnitt mit einem U-förmigen Querschnitt ist
wobei der schmale und der breite Abschnitt mit Bohrschrauben zur Bildung von Rahmen und Traversen zusammengefügt werden kennen,
jeder der Abschnitte hat drei Seiten, zwei Schenkelseiten und eine Basisseite, die die U-Form bilden
wobei in der Mitte jeder der drei Seiten ein Kanal (1, 2, 3) mit einer Trapezform mit um 45 Grad geneigten Seitenwänden ausgebildet ist
wobei die Kanäle (1, 3) an den zwei Schenkelseiten des schmalen und des breiten Abschnitts und der Kanal (2) an der Basisseite des schmalen Abschnitts dieselben Abmessungen mit der
gleichen Tiefe und der gleichen Breite an der Kanalbasis aufweisen
wobei die Tiefe des Kanals plus die Materialdicke des Metallabschnitts gleich "a" ist,
wobei der Kanal (2) auf der Basisseite des breiten Abschnitts ebenfalls dieselbe Tiefe aufweist und die Kanalbasis des Kanals (2) eine Breite von b + 2a aufweist
damit der schmale Abschnitt in dem breiten Abschnitt fest, vertikal oder geneigt angebracht werden kann
wobei die freien Enden der beiden Schenkelseiten der schmalen und breiten U-förmigen Abschnitte nach innen gebogene Ecken aufweisen, die mit den Seitenteilen beiderseits der trapezförmigen Seitenkanäle Vorsprünge (4, 5, 6, 7, 8, 9, 10, 11) mit Trapezform ähnlich wie dieser der Seitenkanäle erzeugen
wobei alle Vorsprünge (4, 5, 6, 7, 8, 9, 10, 11) der zwei Abschnitte die gleichen Abmessungen haben.

2. Das strukturelle polymorphe System nach Anspruch 1, **dadurch gekennzeichnet, dass** die Kanäle (1, 2, 3) eine ausreichende Tiefe aufweisen, so dass beim Eindrehen der Bohrschraube oder einer anderen Schraube in deren Mitte (abhängig von der Größe und der Verwendung der Systemabschnitte) der Schraubenkopf nicht vorsteht und der Kontakt von Belagmaterialien nicht verhindert wird, während sie den Kraftübergang zwischen den Rahmen erleichtern und den Abschnittswiderstand bei Flexion, Torsion, Kompression und Deformation verstärken.

3. Das strukturelles polymorphes System nach Anspruch 1, **dadurch gekennzeichnet, dass** die Abschnitte an ihrer Seite eine metrische Gravur (16) tragen können, um ihr Schneiden zu erleichtern, und eine geprägte Oberfläche (17), wo das Verschrauben stattfindet, für eine schnellere Montage.

## Revendications

1. Un système structurel polymorphe comprenant:
une partie étroite et une partie large,
dans lequel chacune desdites parties est une partie métallique, à paroi mince, ouverte ayant une section transversale en forme de U,
dans lequel la partie étroite et la partie large peuvent être assemblées avec des vis de perçage pour la formation de cadres et de treillis,
chacune desdites parties ayant trois côtés, deux côtés de jambe et un côté de base, formant la forme en U
dans lequel au milieu de chacun des trois côtés, un canal (1, 2, 3) est formé à une forme trapézoïdale avec des parois latérales inclinées de 45 degrés,
dans lequel les canaux (1, 3) sur les deux côtés de jambe de la partie étroite et
large et le canal (2) sur le côté intérieur de la partie étroite ont les mêmes dimensions avec la même
profondeur et la même largeur à la base du canal
dans lequel ladite profondeur du canal plus l'épaisseur de matériau de la partie métallique est égale à "a",
dans lequel le canal (2) au côté de base de la partie large a également la même profondeur
et la base de canal dudit canal (2) a une largeur de b + 2a,
de sorte que la partie étroite puisse être montée fermement, en vertical ou inclinée, dans la partie large
dans lequel les extrémités libres des deux côtés de jambe des parties en U, étroite et large, ont des coins recourbés vers l'intérieur qui génèrent avec les parties des côtés des deux côtés des canaux latéraux trapézoïdaux des saillies (4, 5, 6, 7, 8, 9, 10, 11) en forme trapézoïdale similaire à celle des canaux latéraux,
dans lequel toutes les saillies (4, 5, 6, 7, 8, 9, 10, 11) des deux parties ont les mêmes dimensions.

2. Le système polymorphe structurel selon la revendication 1 **caractérisé en ce que** les canaux (1,2,3) ont une profondeur suffisante pour que lors du vissage de la vis de perçage ou de toute autre vis en leur contre (en fonction de la taille et de l'utilisation des parties du système) la tête de vis ne fait pas saillie et le contact des matériaux de couverture n'est pas empêché, tandis qu'ils facilitent le transfert de force entre les cadres et ils amplifient la résistante des parties en flexion, torsion, compression et déformation.

3. Le système polymorphe structurel selon la revendication 1 **caractérisé en ce que** les parties peuvent avoir une gravure métrique (16) sur leur côté afin de faciliter leur découpe et une surface gaufrée (17) où le vissage a lieu pour un montage plus rapide
